# EUROPEAN PATENT SPECIFICATION

(11) **EP 1 971 654 B1**
(45) Date of publication and mention of the grant of the patent: **20.03.2013**
(21) Application number: 06845370.3
(22) Date of filing: 13.12.2006
(51) Int. Cl.: C09D 167/00

(54) **Process of coil coating**
Verfahrenprozess für coilcoating
Procédé de revêtement de bobines

(30) Priority: 15.12.2005 EP 05292702
(43) Date of publication of application: 24.09.2008
(73) Proprietor: Dupont Powder Coatings France S.A.S., 42601 Montbrison Cedex (FR)
(72) Inventor: FUGIER, Roger, F-42600 Montbrison (FR); BERGER, Vincent, F-42290 Sorbiers (FR)
(74) Representative: Biering, Christine
(86) International application number: PCT/US2006/047631
(87) International publication number: WO 2007/075345

(56) References cited:
- EP-A- 0 244 823
- EP-A- 0 383 601
- EP-A- 1 057 875
- WO-A-00/29497
- WO-A-01/70893
- FR-A- 2 457 884
- US-A- 4 463 140
- US-A- 4 997 907
- US-A- 5 457 168
- US-A- 5 635 548
- US-A1- 2002 032 275
- US-A1- 2005 090 627
- US-B1- 6 406 757
- US-B1- 6 537 620

## Description

### Title of the Invention

### Field of the Invention

The present invention is directed to a process of coil coating of substrate surfaces, which is a significant improvement over the systems of prior art in that they present health advantages.

### Description of Prior Art

Coil coating of substrates is a process of coating strips or sheets of, e.g., metal that are in the shape of coils, with liquid or powder coating compositions. In general, such coils are being un-wound, and are cleaned or pre-treated, then coated, cured in an oven, cooled down and are wounded again. This process proceeds under high speed, e.g. at coating speeds of, for example, > 50 m/min.

Powder coating compositions are being used more and more for that kind of coating process. Especially thermosetting powder compositions are used based on polyesters as binder resin and typical curing agents such as solid polyepoxides, for example triglycidyl isocyanurate (TGIC).

US 6 406 757 refers to coil coating technique, besides other techniques, using powder coating compositions comprising specific curing agents, for example TGIC.

The polyester/TGIC system gives coatings with good properties for outdoor use, especially for the coating of metal substrates such as weather durability and chemical resistance as well as fast curing of the coating and flexibility of the cured coating.

The problem arising with these systems is the high toxicity of TGIC, a product of mutagenic character apart from being irritant to the skin and the mucosae, toxic on inhalation, and the like. This compels the introduction of robust safety measures from the standpoint of the health of the workforce, the personnel having to be appropriately protected and to submit to the appropriate medical checks, thereby entailing substantial costs in addition to the already high cost of TGIC.

Accordingly, there is a need to replace this polyester resin/TGIC system by other, less harmful and globally less expensive systems.

There are numerous patents in which the use of organic peroxides as curing initiator or agent is described for different types of resins, e.g. JP 49128939, JP 49040348, JP 55025462, DE2332749, JP 54150440, JP 55027307, JP 56100870, JP 55003416, JP 54158440, JP 52150443, JP 49129725, JP-04/227713 and JP 49093425. Such formulations are not suitable for coil coating processes.

In the article "Rund um TGIC-freie Pulverlacke". (Th. Brock, Farbe&Lack, volume 106, 2/2 000, pages 38 to 44) alternatives of TGIC substitutes are named such as polyurethanes, anhydrides + glycidylmethacrylate and hydroxyl alkyl amides. The TGIC-free powder coats may have good coating properties but show difficulties regarding weatherability resistance, generating pin holes and problems regarding balance of flow and sagging properties, low storage stability.

There is a need to provide a coating composition suitable for coil coating applications which overcome the drawbacks of toxicity presented by TGIC and of disadvantages presented by the TGIC alternatives, and which may be cured at a short time.

### Summary of the Invention

The present invention provides a process of coil coating comprising the steps
a. applying a powder coating composition comprising
   (A) 40 to 99 wt% of at least one saturated carboxylic functional polyester resin having an acid value in the range of 15 to 60,
   (B) 1 to 60 wt% of at least one glycidylester and/or glycidylether selected from the group consisting of triglycidyl trimellitate (TML) and diglycidyl terephthalate (DGT), and
   (C) 0,01 to 40 wt% of at least one coating additive, pigment and/or filler, the wt% being based on the total weight of the powder coating composition.
   On a substrate by coil coating technique at a coating speed of 5 to 50 m/min or > 50 m/min and
b. cusing the applied powder coating composition.

In spite of substitution of TGIC, the powder coating composition of this invention are coating compositions having a good storage stability and giving coatings with good coating properties, particularly, high exterior durability and stable flexibility. Surprisingly the disadvantages caused by the known TGIC substitutes such as pin holes and gassing of the coating may be prevented. The composition of the invention fulfils the requirements of health and safety classification in Europe, e.g. is not classified as "Toxic" according to the European Chemicals Regulations in particular R46 (R46 phrases: May cause heritable genetic damage).

The powder coating compositions according to the invention is especially suitable for the coil coating technology, that means, for coating applications also under high speed, e.g. at coating speeds of > 50 m/min providing coatings with a high flexibility under post forming.

### Detailed Description of the Invention

The features and advantages of the present invention will be more readily understood, by those of ordinary skill in the art, from reading the following detailed description. It is to be appreciated those certain features of the invention, which are, for clarity, described above and below in the context of separate embodiments, may also be provided in combination in a single embodiment. Conversely, various features of the invention that are, for brevity, described in the context of a single embodiment, may also be provided separately or in any sub-combination. In addition, references in the singular may also include the plural (for example, "a" and "an" may refer to one, or one or more) unless the context specifically states otherwise.

The slight variations above and below the stated ranges of numerical values can be used to achieve substantially the same results as values within the ranges. Also, the disclosure of these ranges is intended as a continuous range including every value between the minimum and maximum values.

Suitable polyester resins as component A) are saturated carboxylic functional polyester resins. They have an acid value in the range of 15 to 60,

The acid value is defined as the number of mg of potassium hydroxide (KOH) required to neutralise the carboxylic groups of 1 g of the resin.

The polyesters may be produced in a conventional manner by reacting of one or more aliphatic, aromatic or cycloaliphatic di- or polycarboxylic acids, and the anhydrides and/or esters thereof with polyalcohols, as is, for example, described in D.A. Bates, The Science of Powder Coatings, volumes 1 & 2, Gardiner House, London, 1990, and as known by the person skilled in the art.

Examples of suitable polycarboxylic acids, and the anhydrides and/or esters thereof include maleic acid, fumaric acid, malonic acid, adipic acid, 1.4-cyclohexane dicarboxylic acid, isophthalic acid, terephthalic acid, acrylic acid, and their anhydride form, or mixtures thereof. Examples of suitable alcohols are benzyl alcohol, butanediol, hexanediol, ethylene glycol, diethylene glycol, pentaerytritol, neopentyl glycol, propylene glycol, and mixtures thereof.

The saturated carboxyl group containing polyesters may be used together with small amounts of hydroxyl group containing polyesters, for example 0 to 10 wt% of hydroxyl group containing polyesters having a hydroxyl value of, for example, 10 to 200,

Preferred is the use of saturated carboxyl-functionalized polyesters without any addition of hydroxyl group containing polyesters.

The polyester resins may have a glass transition temperature Tg in a range of, e.g., 35 to 80°C, preferably 50 to 75 °C, Tg determined by means of differential scanning calorimetry (DSC). The number average molecular weight Mn of the resins is in the range of, e.g., 2 000 to 10 000, Mn determined from gel permeation chromatography (GPC) using polystyrene standard.

Crystalline and/or semicrystalline saturated carboxylic functional polyester resins are also usable which have a Tm (melting temperature) in the range of e.g., 50 to 150°C, determined by means of DSC.

The polyesters of the invention can also be partially self cross-linkable polyesters containing cross-linkable functional groups known by a person skilled in the art.

Component B) of this invention is used as hardener of Component A). Glycidylesters and/or glycidylethers may be used as component B) selected from the group consisting of TML and DGT. Preferred is the use of TML and DGT in solid form.

The polyglycidyl ethers based on aliphatic, aromatic and/or cycloaliphatic epoxy resins can be used which are known in the powder coating area.

The hardeners of the invention may be used together with small amounts of other suitable hardeners known by the person skilled in the art, for example, blocked polyisocyates such as, e.g. aliphatic diisocyanates, for example, in quantities in the range of 0 to 10 wt%.

The content of the polyester resin (A) may be in a range, for example, preferably between 40 wt% and 95 wt%, particularly in the range of 50 wt% to 90 wt%.

The content of the hardener (B) may be, for example, preferably in a range between 2 wt% and 30 wt%, particularly in the range of 3 to 20 wt%.

The powder coating composition may contain as further components the constituents conventional in powder coating technology, such as, additives, pigments and/or fillers as known by a person skilled in the art.

Additives are, for example, degassing auxiliaries, flow-control agents, flatting agents, texturing agents, fillers (extenders), catalysts, dyers, anti-oxidant, anti-UV, tribostatic or corona electrostatic charging auxiliaries. Compounds having antimicrobial activity may also be added to the powder coating compositions.

The crosslinking reaction may be additionally accelerated by the presence in the powder coating composition according to the invention of catalysts known from thermal crosslinking. Such catalysts are, for example, tin salts, phosphides, amines, ammonium salts, cyclic amidines, phosphonium salts, alkyl- or aryl- imidazolines and amides. They may be used, for example, in quantities of 0,02 to 3 wt%, based on the total weight of the powder coating composition.

The powder coating composition may contain transparent, color-imparting and/or special effect-imparting pigments and/or fillers (extenders). Suitable color-imparting pigments are any conventional coating pigments of an organic or inorganic nature considering their heat stability which must be sufficient to support the curing of the powder coating composition of the invention. Examples of inorganic or organic color-imparting pigments are titanium dioxide, micronized titanium dioxide, carbon black, azopigments, and phthalocyanine pigments. Examples of special effect-imparting pigments are metal pigments, for example, made from aluminum, copper or other metals, interference pigments, such as, metal oxide coated metal pigments and coated mica. Examples of usable extenders are silicon dioxide, aluminum silicate, barium sulfate, calcium carbonate, magnesium carbonate, micronized dolomite.

The constituents are used in conventional amounts known to the person skilled in the art, for example, based on the total weight of the powder coating composition, regarding pigments and/or fillers in quantities of 0 to 40 wt.%, preferred 0 to 35 wt%, regarding the additives in quantities of 0,01 to 5%, preferred 1 to 3 wt%.

The powder coating composition may be prepared by conventional manufacturing techniques used in the powder coating industry, such as, extrusion and/or grinding processes.

For example, the ingredients used in the powder coating composition, can be blended together and the mixture is extruded. In the extruder the mixture is melted and homogenized, a dispersion of pigments is ensured by shearing effect. The extruded material is then cooled on chill roles, broken up and then ground to a fine powder, which can be classified to the desired grain size, for example, to an average particle size of 20 to 200 µm, preferred 20 to 50 µm.

The powder coating composition may also be prepared by spraying from supercritical solutions, NAD "non-aqueous dispersion" processes or ultrasonic standing wave atomization process.

Furthermore, specific components of the composition according to the invention, for example, additives, pigment, fillers, may be processed with the finished powder coating particles after extrusion and grinding by a "bonding" process using an impact fusion. For this purpose, the specific components may be mixed with the powder coating particles. During blending, the individual powder coating particles are treated to softening their surface so that the components adhere to them and are homogeneously bonded with the surface of the powder coating particles. The softening of the powder particles' surface may be done by heat treating the particles to a temperature, e.g. the glass transition temperature Tg of the composition, in a range, of e.g., 50 to 60°C. After cooling the mixture the desired particle size of the resulted particles may be proceed by a sieving process.

The powder coating composition of this invention may be applied by, e.g., electrostatic spraying, thermal or flame spraying, or fluidized bed coating methods, all of which are known to those skilled in the art.

The powder coating composition according to the invention is especially suitable for the coil coating technique at coating speeds of, 5 to 50 m/min, also for high speed coating, at coating speeds of, > 50 m/min.

Coil coating techniques such as cloud technology generated by rotating brush and electromagnetic brush technology (EMB) as well as other known application techniques like corona or tribostatic sprayer guns or rotative bells projectors are examples for the application by coil coating procedure as known by a person skilled in the art. For example, the metal sheets or strips may be disposed on a horizontal conveyor during coil coating.

The coating compositions may be applied to, e.g., metallic substrates, non-metallic substrates, such as, paper, wood, plastics, glass and ceramics, as a one-coating system or as coating layer in a multi-layer film build. In certain applications, the substrate to be coated may be pre-heated before the application of the powder composition, and then either heated after the application of the powder or not. For example, gas is commonly used for various heating steps, but other methods, e.g., microwaves, conduction methods, Infrared (IR) radiation, near infrared (NIR) radiation, electrical induction heating are also known. Catalytic gas infrared ovens and electric infrared oven are commonly used, frequently coupled with gas convection ovens.

The powder coating compositions according to the invention can be applied directly on the substrate surface or on a layer of a primer which can be a liquid or a powder based primer. The powder coating compositions according to the invention can also be applied as a coating layer of a multilayer coating system based on liquid or powder coats, for example, based on a powder or liquid clear coat layer applied onto a color-imparting and/or special effect-imparting base coat layer or a pigmented one-layer powder or liquid top coat applied onto a prior coating.

The applied and melted powder coating layer can be cured by thermal energy. The coating layer may, for example, be exposed by convective, gas and/or radiant heating, e.g., infra red (IR) and/or near infra red (NIR) irradiation, as known in the art, to temperatures of, e.g., 100°C to 300°C, preferably of 180°C to 280°C (object temperature in each case).

If the composition according to the invention is used together with unsaturated resins and, optionally photo-initiators or with unsaturated resin containing powders, dual curing may also be used. Dual curing means a curing method of the powder coating composition according to the invention where the applied composition can be cured, e.g., both by high energy radiation such as, e.g. ultra violet (UV) irradiation, and by thermal curing methods known by a skilled person.

The present invention is further defined in the following Examples. It should be understood that these Examples are given by way of illustration only.

The following Examples illustrate the invention.

### Examples

### Example 1

### Manufacture of a Powder Coating Composition and Application

A powder coating composition according to the invention is prepared using the following ingredients:

| Composition 1 | Weight% |
|---|---|
| URALAC P3485 (COOH polyester acid value 27) | 81,7 |
| Araldite PT 912 (mixture of TML and DGT) | 7,0 |
| REAFREE ND 1750 (mixture of COOH polyester, acid value 27, and flow agent, in 90/10 ratio) | 6,6 |
| DISPARLON PL 540 (Surface control agent based on modified castor oil) | 2,35 |
| BENZOINE | 0,45 |
| IRGANOX 1010 (anti oxidant) | 0,95 |
| ACCELERATEUR DT 3126-2 | 0,95 |

The ingredients of each composition are mixed and extruded in an extruder PR 46 (firm: Buss AG) at 120°C. The melt-mixed formulation is cooled and the resulted material is grinded to a D50 value of 30 µm particle size distribution.

The final powder compositions are applied to a 0.8-mm metal sheet using the coil coating technology at a coil coating speed of about 40 m/min and cured by medium wave infrared electric emitters adjusted in such a way that the coated surface temperature increases from room temperature to 270 °C in 60 seconds (s), kept at 270 °C for 10 second and cooled down rapidly to room temperature. The total heating time is 70 seconds and the cooling time is 30s by cool air. The resulted film thickness is of 45 µm.

### Example 2

### Testing of the Coating

**Table 1**

| **Composition** | **Mechanical Properties Impact Test** | **Flexibility (Postforming) ECCA T7 1996** | **Gassing (Pinholes, Visual observation)** |
|---|---|---|---|
| 1 | more than 90% gloss retention | O-T bends without cracks | no |

The test results show very good mechanical properties, high flexibility without any gassing and cracking.

## Claims

1. A process of coil coating comprising the steps
a. applying a powder coating composition comprising
(A) 40 to 99 wt% of at least one saturated carboxylic functional polyester resin having an acid value in the range of 15 to 60,
(B) 1 to 60 wt% of at least one glycidylester and/or glycidylether selected from the group consisting of triglycidyl trimellitate (TML) and diglycidyl terephthalate (DGT), and
(C) 0.01 to 40 wt% of at least one coating additive, pigment and/or filler,
the wt% being based on the total weight of the powder coating composition, on a substrate by coil coating technique at a coating speed of 5 to 50 m/min or > 50 m/min, and
b. curing the applied powder coating composition.

2. The process of claim 1 wherein the coating speed is >50 m/min.

3. The process according to claims 1 and 2 wherein the saturated carboxylic functional polyester resins have a number average molecular weight Mn in the range of 2,000 to 10,000, Mn determined from gel permeation chromatography (GPC) using polystyrene standard.

4. The process according to claims 1 and 2 wherein the saturated carboxylic functional polyester resins have a glass transition temperature Tg in a range of 35 to 80°C, Tg determined by means of differential scanning calorimetry (DSC).

5. The process according to claims 1 to 4 wherein the content of component A) is in a range between 40 wt% and 95 wt%.

6. The process according to claims 1 to 5 wherein the content of component B) is in a range between 2 wt% and 30 wt%.

## Patentansprüche

1. Verfahren zum Bandbeschichten, umfassend die Schritte
a. Aufbringen einer Pulverbeschichtungszusammensetzung umfassend
(A) 40 bis 99 Gew.-% mindestens eines gesättigten carboxylfunktionellen Polyesterharzes, das einen Säurewert im Bereich von 15 bis 60 aufweist,
(B) 1 bis 60 Gew.-% mindestens eines Glycidylesters und/oder Glycidylethers ausgewählt aus der Gruppe bestehend aus Triglycidyltrimellitat (TML) und Diglycidylterephthalat (DGT) und
(C) 0,01 bis 40 Gew.-% mindestens eines Beschichtungszusatzmittels, Pigments und/oder Füllstoffs,
wobei die Gew.-% auf das Gesamtgewicht der Pulverbeschichtungszusammensetzung bezogen sind, auf ein Substrat durch Bandbeschichtungstechnik mit einer Beschichtungsgeschwindigkeit von 5 bis 50 m/min oder >50 m/min und
b. Aushärten der aufgebrachten Pulverbeschichtungszusammensetzung.

2. Verfahren nach Anspruch 1, wobei die Beschichtungsgeschwindigkeit >50 m/min beträgt.

3. Verfahren nach den Ansprüchen 1 und 2, wobei die gesättigten carboxylfunktionellen Polyesterharze ein zahlendurchschnittliches Molekulargewicht Mn im Bereich von 2000 bis 10000 aufweisen, wobei Mn durch Gelpermeationschromatographie (GPC) unter Anwendung von Polystyrolstandard bestimmt wird.

4. Verfahren nach Anspruch 1 und 2, wobei die gesättigten carboxylfunktionellen Polyesterharze eine Glasübergangstemperatur Tg in einem Bereich von 35 bis 80 °C aufweisen, wobei die Tg durch Differentialscanningkalorimetrie (DSC) bestimmt wird.

5. Verfahren nach Anspruch 1 bis 4, wobei der Gehalt der Komponente A) in einem Bereich zwischen 40 Gew.-% und 95 Gew.-% liegt.

6. Verfahren nach Anspruch 1 bis 5, wobei der Gehalt der Komponente B) in einem Bereich zwischen 2 Gew.-% und 30 Gew.-% liegt.

## Revendications

1. Procédé de revêtement de bobine comprenant les étapes
a. d'application d'une composition de revêtement pulvérulente comprenant
(A) 40 à 99 % en pds d'au moins une résine de polyester saturé à fonctionnalité carboxylique ayant un indice d'acidité dans la plage de 15 à 60,
(B) 1 à 60 % en pds d'au moins un ester de glycidyle et/ou éther de glycidyle sélectionné parmi le groupe constitué du trimellitate de triglycidyle (TML) et du téréphtalate de diglycidyle (DGT), et
(C) 0,01 à 40 % en pds d'au moins un additif pour revêtement, un pigment et/ou une charge,
les % en pds étant basés sur le poids total de la composition de revêtement pulvérulente, sur un substrat par technique de revêtement de bobine à une vitesse de revêtement de 5 à 50 m/min ou > 50 m/min, et
b. durcissement de la composition de revêtement pulvérulente appliquée.

2. Procédé selon la revendication 1, dans lequel la vitesse de revêtement est > 50 m/min.

3. Procédé selon les revendications 1 et 2, dans lequel les résines de polyester saturé à fonctionnalité carboxylique ont un poids moléculaire moyen en nombre Mn dans la plage de 2 000 à 10 000, Mn déterminé par chromatographie par perméation sur gel (CPG) en utilisant un étalon polystyrène.

4. Procédé selon les revendications 1 et 2, dans lequel les résines de polyester saturé à fonctionnalité carboxylique ont une température de transition vitreuse Tg située dans une plage de 35 à 80°C, Tg déterminée par calorimétrie différentielle à compensation de puissance (ACD).

5. Procédé selon les revendications 1 à 4, dans lequel la teneur du composant A) se situe dans une plage comprise entre 40 % en pds et 95 % en pds.

6. Procédé selon les revendications 1 à 5, dans lequel la teneur du composant B) se situe dans une plage comprise entre 2 % en pds et 30 % en pds.
